# EUROPEAN PATENT SPECIFICATION

(11) **EP 3 740 038 B1**
(45) Date of publication and mention of the grant of the patent: **21.02.2024**
(21) Application number: 19174588.4
(22) Date of filing: 15.05.2019
(51) Int. Cl.: H05B 45/37, H05B 47/18

(54) **DALI POWER SUPPLY USING RESONANT CONVERTER**
DALI-STROMVERSORGUNG MIT RESONANZWANDLER
ALIMENTATION DALI UTILISANT UN CONVERTISSEUR RÉSONANT

(43) Date of publication of application: 18.11.2020
(73) Proprietor: Tridonic GmbH & Co. KG, 6851 Dornbirn (AT)
(72) Inventor: Lochmann, Frank, 88147 Achberg (DE); Mitterbacher, Andre, 6850 Dornbirn (AT); Schertler, Markus, 6952 Hittisau (AT); Vonach, Christoph, 6858 Schwarzach (AT)
(74) Representative: Rupp, Christian

(56) References cited:
- WO-A1-2018/077695
- US-A1- 2008 258 551
- US-A1- 2015 028 761
- US-A1- 2015 077 003

## Description

The invention relates to a DALI interface with an integrated power supply.

In the past, in order to power a DALI bus, mostly external power supplies separate from a DALI interface have been used. This solution requires additional devices and is suboptimal for small DALI solutions.

As an alternative, flyback-converter based power supplies have been integrated into DALI interfaces. This solution though requires large magnetic components, limiting miniaturization. This solution moreover requires a significant amount of external components for sensing and shutdown.

For example the document DE 10 2010 028 098 A1 shows an exemplary DALI interface.

Moreover, document US 2008/258551 A1 discloses a communication circuit for an electronic dimming ballast which provides high-voltage miswire protection and improved rise and fall times of a transmitted digital signal. The electronic dimming ballast comprises a control circuit, which is coupled to a digital communication link, for example, a DALI communication link, via the communication circuit. The communication circuit comprises a receiving circuit for detecting when the digital ballast communication link is shorted and for providing a received digital message to the control circuit. The communication circuit also comprises a transmitting circuit for shorting the communication link in response to the control circuit. The communication circuit also includes a high-voltage fault protection circuit for protecting the circuitry of the communication circuit if the communication circuit high-voltage mains voltages. The communication circuit is operable to reliably transmit digital messages having improved rise and fall times. The communication circuit draws acceptable amounts of current when the communication link is alternatively in idle and active states.

Document US 2015/028761 A1 discloses a galvanically isolated transformer for energizing a lamp which comprises a primary circuit including a half-bridge circuit that has two reciprocally clocked switches, and including an LLC resonant circuit. The transformer further comprises a secondary circuit including an output for supplying energy to the lamp. A control device is designed to control the half-bridge circuit in accordance with a control variable (ipeak) detected in the primary circuit in order to adjust a current intensity supplied to the lamp by the secondary circuit to a desired value.

Accordingly, the object of the invention is to provide a DALI interface, which can be built to a small scale while not requiring a great deal of hardware components.

The object is solved by the features of claim 1. The dependent claims contain further developments.

An inventive DALI interface comprises an integrated DALI power supply, in turn comprising a resonant half-bridge converter, adapted to generate and supply a first voltage of a DALI bus output signal to the DALI bus. Moreover, the DALI interface comprises a reception unit, adapted to receive DALI signals, by at least indirectly measuring a current flow on the DALI bus during active switching of the resonant half-bridge converter. This achieves a very small-scale construction of the DALI interface, while at the same time requiring a minimal number of components.

Advantageously, the reception unit is adapted to measure an output voltage of an output signal on the primary side of the converter. The DALI interface is adapted to regulate the resonant half-bridge converter based on the measured output voltage on the primary side. This allows for a very efficient regulation.

Advantageously, the reception unit is adapted to measure an output current of an output signal of a resonator of the resonant half-bridge converter on the primary side of the converter. The reception unit is adapted to derive the current flow on the DALI bus from the measured output current on the primary side. Additionally, the DALI interface is adapted to perform a DALI bus protection and or a DALI interface protection based on the output current on the primary side. This allows for very efficiently receiving signals on the DALI bus, while protecting the DALI interface and the DALI bus from damage.

Advantageously, the reception unit comprises a shunt resistor for at least indirectly measuring the current flow on the DALI bus during active switching of the resonant half-bridge converter. This allows for a very simple measuring of the current.

Alternatively, the reception unit comprises an auxiliary winding of a transformer of the resonant half-bridge converter, for at least indirectly measuring the current flow on the DALI bus during active switching of the resonant half-bridge converter. This results in a slightly higher accuracy of the measurement and also requires only a minimal hardware effort.

Advantageously, the resonant half-bridge converter comprises a primary side, in turn comprising at least two switches, adapted to generate a pulsed primary side signal from an input DC signal and a resonator, adapted to generate a resonator signal when supplied with the pulsed primary side signal. Moreover, the half-bridge converter comprises a secondary side, and a transformer adapted to couple the resonator signal to the secondary side, resulting in a transformer signal. The secondary side in turn comprises a rectifier, which is adapted to rectify the transformer signal, resulting in a rectified transformer signal, and an output smoothing unit adapted to smooth the rectified transformer signal, resulting in the DALI bus output signal. This allows for a very efficient construction of the DALI interface.

Advantageously, the at least two switches are formed by integrated circuits. Additionally or alternatively, the transformer is formed by an integrated circuit. Additionally or alternatively, the resonator is formed an integrated circuit. All these integrated circuits can be part of one integrated circuit. This allows for a very small scale construction of the DALI interface.

Advantageously, the resonant half-bridge converter is adapted to selectively provide a second voltage, different from the first voltage to the DALI bus. The first voltage corresponds to logical HIGH and the second voltage corresponds to a logical LOW of the DALI bus. This allows for transmitting signal to DALI devices connected to the DALI bus without additional components.

Advantageously, the first voltage is between 10 and 20 volts, preferably between 14 and 17 volt, most preferably 16 volt. Additionally or alternatively, the second voltage is lower than 8 volt preferably lower than 4,5 volt, most preferably 0 volt. This allows for a easy separation between the different logical levels.

Preferably, the resonant half-bridge converter is adapted to operate continuously. The DALI interface then comprises a power supply, switchable between a first supply voltage and a second supply voltage being supplied to the resonant half-bridge converter. The DALI interface is then adapted to generate and supply the first voltage to the DALI bus, by supplying the first supply voltage to the resonant half-bridge converter. The DALI interface is then moreover adapted to generate and supply the second voltage to the DALI bus, by supplying the second supply voltage to the resonant half-bridge converter. This allows for an especially simple construction of the DALI interface.

Alternatively, the resonant half-bridge converter is adapted to operate in a pulse width operation mode. The DALI interface is then adapted to generate and supply the first voltage to the DALI bus by operating the resonant half-bridge converter at a first duty cycle and to generate and supply the second voltage to the DALI bus, by operating the resonant half-bridge converter at a second duty cycle. The first duty cycle is therein larger than the second duty cycle. This allows for a very simple generation of the first and second voltage supplied to the DALI bus.

In a further alternative, the resonant half-bridge converter is adapted to selectively operate at a first frequency and at a second frequency. The first frequency and the second frequency advantageously have different distances from a resonance frequency of a resonator of the resonant half-bridge converter. The DALI interface is then adapted to generate and supply the first voltage to the DALI bus, by operating the resonant half-bridge converter at the first frequency and to generate and supply the second voltage to the DALI bus by operating the resonant half-bridge converter at the second frequency. Therein, the first frequency is closer to the resonance frequency of the resonator than the second frequency. This option allows for a very simple generation of the two different voltage levels.

In a further alternative, the resonant half-bridge converter is adapted to operate in a burst mode. The DALI interface is adapted to generate and supply the first voltage to the DALI bus by operating the resonant half-bridge converter, and to generate and supply the second voltage to the DALI bus by not operating the resonant half-bridge converter. Although this option limits the second voltage to OV, it requires only minimal hardware effort.

Preferably, the DALI interface is adapted to operate the half-bridge converter to transition from the first voltage to the second voltage, and from the second voltage to the first voltage within no more than 30us, preferably no more than 25µs, more preferably no more than 15µs, most preferably no more than 10µs. This allows for connected DALI devices recognizing the communication pulses accurately.

Advantageously, the output smoothing unit comprises a capacitor or a bandpass filter. This allows for smoothing the output signal with minimal hardware effort, while at the same time adhering to the timing requirements.

Further advantageously, the output smoothing unit comprises a voltage limiter, adapted to limit remaining ripple in the smoothed rectified transformer signal. This allows for keeping the capacitor or band pass filter at a very low time constant while at the same time optimizing signal quality.

An exemplary embodiment of the invention is now further explained with respect to the drawings in which
- Fig. 1: shows a first embodiment of the DALI interface in a block diagram;
- Fig. 2: shows a detail of a second embodiment of the DALI interface as a circuit diagram;
- Fig. 3: shows a number of exemplary signals in a third embodiment of the DALI interface, and
- Fig. 4: shows a number of exemplary signals in a fourth embodiment of the DALI interface.

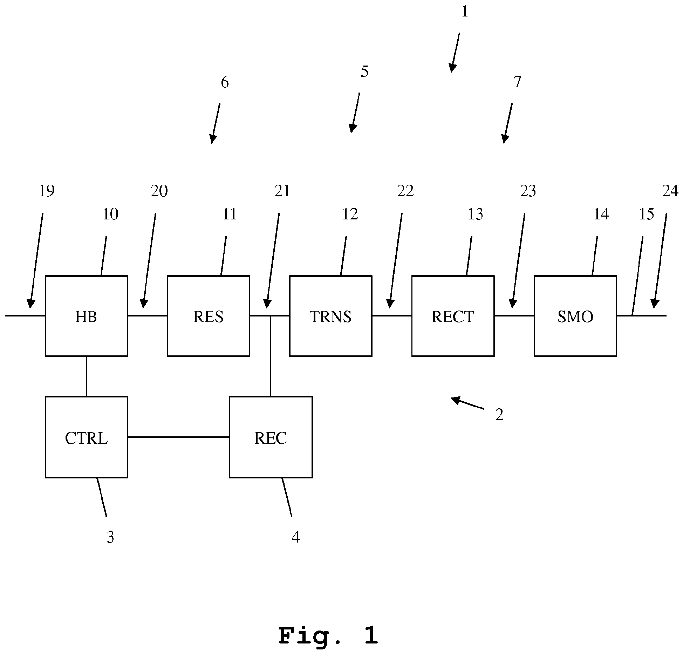

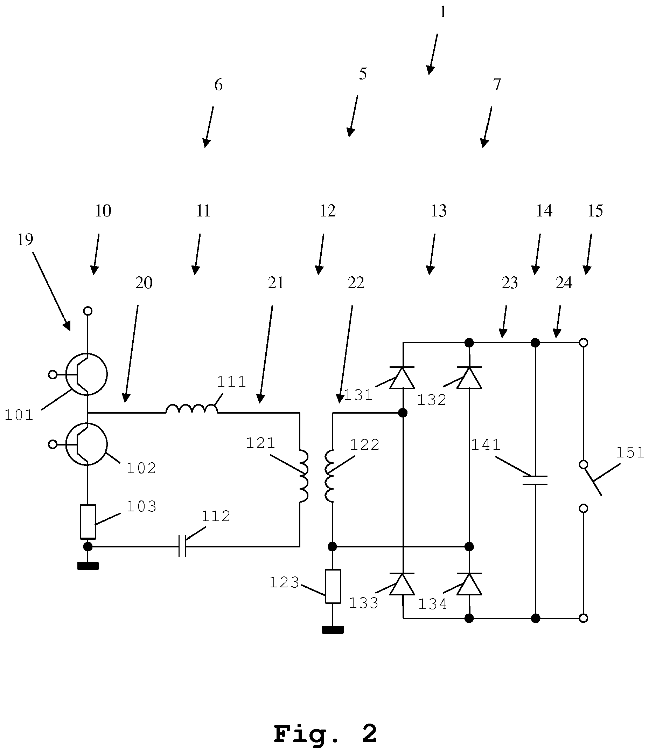

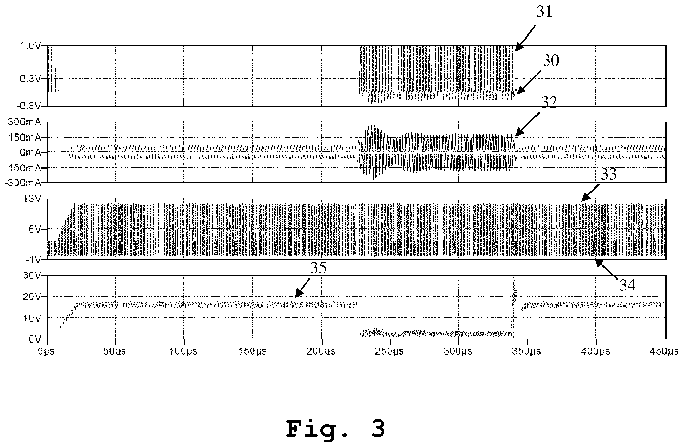

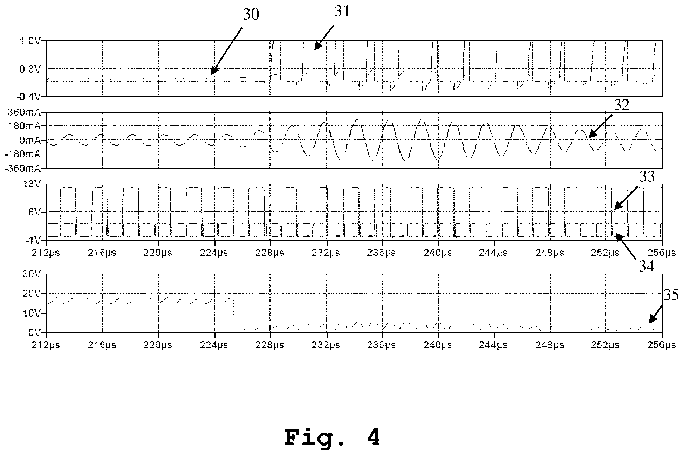

First, we demonstrate the general construction and function along Fig. 1. With regard to Fig. 2, further construction and function details are explained. Finally, with regard to Fig. 3 and Fig. 4 the function is further shown in detail. Similar entities and reference numbers in different figures have been partially omitted.

In Fig. 1, a first embodiment of the DALI interface 1 is shown. The DALI interface 1 comprises an integrated power supply 2 and a reception unit 4. The DALI interface 1 is connected to a DALI bus 15. Moreover, optionally, the DALI interface moreover comprises a controller 3, which controls the function of the individual components of the DALI interface 1.

The integrated DALI power supply 2 comprises a resonant half-bridge converter 5, which comprises a primary side 6, a transformer 12 and a secondary side 7. The primary side 6 comprises at least two switches, embodied here as a half-bridge 10, adapted to generate a pulsed primary side signal 20 from an input DC signal 19. Moreover, the primary side 6 comprise a resonator 11, which is connected to the half-bridge 10, and is adapted to generate a resonator signal 21 when supplied with the pulsed primary side signal 20. The resonator 11 is moreover connected to the transformer 12, which is adapted to couple the resonator signal 21 to the secondary side 7, resulting in a transformer signal 22.

The secondary side 7 comprises a rectifier 13, which is connected to the transformer 12 and adapted to rectify the transformer signal 22, resulting in a rectified transformer signal 23. Connected to the rectifier 13, the secondary side comprises an output smoothing unit 14, which is adapted to smooth the rectified transformer signal 23, resulting in a DALI bus output signal 24, which is output to the DALI bus 15.

The at least two switches of the half-bridge 10 and/or the transformer 12 and/or the resonator 11 can be formed by integrated circuits, or one joint integrated circuit.

In regular operation, the DALI interface 1 generates and supplies a first voltage of the DALI bus output signal 24 to the DALI bus 15.

Moreover, the DALI interface 1 comprises a reception unit 4, connected between the resonator 11 and the transformer 12. The reception unit 4 is moreover connected to a controller 3, which in turn is connected to the half-bridge 10. The reception unit 4 is adapted to receive signals indicative of a current on the DALI bus 15. Especially, according to the invention the reception unit measures a current from the resonator 11 to the transformer 12. According to an embodiment, the reception unit further measures a voltage between the resonator 11 and the transformer 12.

When a DALI device, connected to the DALI, bus short-circuits the DALI bus 15, in order to send a communications pulse, this can therefore be sensed by the reception unit.

The measured signals are handed on to the controller 3, which advantageously uses this information to control the half-bridge 10. Especially, the reception unit 4 can derive the current on the DALI bus 15 from the measured current on the primary side 6. This information can be used for performing a DALI bus protection and/or a DALI interface protection based on the output current on the primary side. Especially, a regulation of the half-bridge converter 5 based upon the measured output voltage on the primary side 6 can be performed by the controller 3. The measurement by the reception unit 4 can be performed for example using a shunt resistor or an extra winding of the primary side of the transformer 12. Also, the controller 3 can derive a DALI message from the signals measured by the reception unit 4.

Advantageously, the DALI interface 1 operates not only as a power supply for the DALI bus 15 and as a receiver for DALI signals, but also as a transmitter for DALI signals. In this case, the DALI bus output signal 24 comprises not only the before-mentioned first voltage, but also comprises a second voltage. The DALI interface 1 is therefore able to selectively provide the first voltage and the second voltage to the DALI bus 15. The first voltage corresponds to a logical HIGH level, while the second voltage corresponds to a logical LOW level. The first voltage is between 10V and 20V, preferably between 14V and volts, most preferably 16V. The second voltage is lower than 8V, preferably lower than 4,5V, most preferably 0V.

In order to generate the two different voltage levels, different approaches are possible:
A first approach is to operate the resonant half-bridge converter 5 continuously at a fixed frequency. The first voltage is achieved by providing a first value of the input voltage 19 to the half-bridge 10, while the second voltage is achieved by providing a second value of the input voltage 19 to the half-bridge 10.
A second option is to operate the resonant half-bridge converter 5 in a pulse width modulation operation mode. By using different duty cycles, different output voltage levels within the DALI bus output signal 24, can be achieved.

A further option is to operate the resonant half-bridge converter 5 at different frequencies. The resonator 11 of the resonant half-bridge converter 5 has a resonance frequency. By using two different frequencies of different distance to the resonance frequency for switching the switches of the half-bridge 10, different output voltage levels within the DALI bus output signal 24 can be achieved.

Finally, a very simple solution of achieving different output voltage levels in the DALI bus output signal 24 is to operate the resonant half-bridge converter 5 in a burst mode. While operating the resonant half-bridge converter 5, a first voltage is achieved, while the second voltage is achieved by not operating the resonant half-bridge converter 5.

The different methods of achieving the different output voltage levels are advantageously controlled by the controller 3. The controller 3 controls the switching of the switches of the half-bridge 10. If the input voltage 19 is used for controlling the output voltage 24 the controller 3 also controls when to supply which input voltage 19 to the half-bridge 10.

In order to achieve clearly recognizable DALI signal pulses within the output signal 24, the transition time between the HIGH voltage level and the LOW voltage level needs to be minimized. Especially, the transition time should be below 30µs preferably below 25µs, more preferably below 15µs, most preferably below 10µs. This is achieved by keeping the time constant within the output signal smoothing unit 14 low. In case of a capacitance being used, this capacitance needs to be kept low. In case of using a bandpass filter, also the time constant of this band pass filter has to be quite low.

Moreover, in order to keep the time constant of the smoothing unit 15 low, and is still achieve a good signal quality, the smoothing unit in addition to a capacitor or to a bandpass filter can additionally comprise a voltage limiter for removing remaining ripple within the output signal.

In Fig. 2 a second embodiment of the DALI interface is shown. In this embodiment, individual circuit elements are displayed. Here, the reception unit 4 and the controller 3 are not displayed.

Here, the half-bridge 10 consists of two serially connected transistors, 101, 102. Moreover, the half-bridge 10 comprises and additional resistor 103, connected in series between transistor 102 and ground. The resonator 11 consists of a capacitance 112 and an inductance 111, connected in parallel. One end of the inductance 111 is connected between the transistors 101, 102, while one end of the capacitance 112 is connected between the resistor 103 and ground.

The transformer 12 consists of a primary side winding 121 and a secondary side winding 122. The primary side winding 121 is connected to a second end of the inductance 111 and to a second end of the capacitance 112. The secondary side winding 122 is connected to the rectifier 13. Moreover, the secondary side winding 122 is connected to a resistor 123, which in turn is connected to ground. The resistor 123 is considered to be part of the transformer 12.

The rectifier 13 here is a diode rectifier, which consists of four diodes 131, 132, 133 and 134. The diodes 131, 132 are connected in series, while the diodes 133, 134 are connected in series. The secondary side winding 122 of the transformer 12 is connected to the mid-points of the respective series connections of diodes. In this embodiment, the smoothing unit 14 consists mainly of a capacitor 141. In addition, this embodiment, the DALI bus 15 is shown connected to a load element, a switch 151, simulating a short-circuiting of the DALI bus by a connected DALI device sending a transmission.

In Fig. 3 a number of signals within an embodiment of the DALI interface is shown. Especially, signal 30 corresponds to a voltage sensed by the reception unit 4 on the primary side. Signal 31 corresponds to this voltage after passing a comparator. Signal 32 in the second plot corresponds to the current through the inductance 111. Signal 33 in the third plot corresponds to a voltage between the two transistors 101, 102 and therefore to the signal 20. Signal 34 corresponds to the switching signal of the transistor 101. Signal 35 in the fourth plot corresponds to the output voltage on the DALI bus 11.

In Fig. 4, enlarged versions of the same signals as in Fig. 3 are shown. The same reference numbers are therefore used here. It can clearly be seen from Fig. 3 and Fig. 4, that at a time of 230us, a DALI load is active. This corresponds to the switch 151 of Fig. 2 being closed. This results in a significant voltage drop on the DALI bus 15. This voltage drop can be measured on the primary side, as can be seen in signal 33.

The invention is not limited to the examples and especially not to a specific type of electronic component. Especially different types of transistors, capacitors, inductors, etc. can be used. Also the invention is not limited to a diode rectifier, as shown here.

## Claims

1. DALI interface (1), comprising:
an integrated DALI power supply (2), comprising
a resonant half-bridge converter (5) having a transformer (12) and a resonator (11) at a primary side (6) of the transformer (12), and adapted to generate and supply, at a secondary side (7) of the transformer (12), a first voltage of a DALI bus output signal (24) to a DALI bus (15), and
a reception unit (4), adapted to receive DALI signals indicative of a current flow on the DALI bus (15) during active switching of the resonant half-bridge converter (5),
wherein the reception unit (4) is adapted to measure an output current of an output signal (21) of the resonator (11),
wherein the reception unit (4) is adapted to derive the current flow on the DALI bus (15) from the measured output current of the output signal (21) of the resonator (11) at the primary side (6) of the transformer (12)).

2. DALI interface (1) according to claim 1,
wherein the reception unit (4) is adapted to measure an output voltage of the output signal (21) on the primary side (6) of the resonant half-bridge converter (5), and
wherein the DALI interface (1) is adapted to regulate the resonant half-bridge converter (5) based on the measured output voltage on the primary side (6).

3. DALI interface (1) according to any of the claims 1 to 2, wherein the reception unit (4) comprises
- a shunt resistor for receiving the DALI signals indicative of the current flow on the DALI bus (15) during active switching of the resonant half-bridge converter (5), or
- an auxiliary winding of a transformer of the resonant half-bridge converter (5), for receiving the DALI signals indicative of the current flow on the DALI bus (15) during active switching of the resonant half-bridge converter (5).

4. DALI interface (1) according to any of the claims 1 to 3, wherein the resonant half-bridge converter (5) comprises
∘ at the primary side (7) of the transformer (12), at least two switches (10), adapted to generate a pulsed primary side signal (20) from an input DC signal (19),
o the resonator is adapted to generate a resonator signal (21) when supplied with the pulsed primary side signal (20), the transformer (12) is adapted to couple the resonator signal (21) to the secondary side, resulting in a transformer signal (22), and wherein the secondary side (7) of the transformer (12) comprises:
o a rectifier (13), adapted to rectify the transformer signal (22), resulting in a rectified transformer signal (23), and
o an output smoothing unit (14), adapted to smooth the rectified transformer signal (23), a smoothed rectified transformer signal resulting in the DALI bus output signal (24).

5. DALI interface (1) according to claim 4,
wherein the at least two switches (10) are formed by integrated circuits, and/or
wherein the transformer (12) is formed by an integrated circuit, and/or
wherein the resonator (11) is formed by an integrated circuit.

6. DALI interface (1) according to any of the claims 1 to 5, wherein the resonant half-bridge converter (5) is adapted to selectively provide a second voltage, different from the first voltage to the DALI bus (15), wherein the first voltage corresponds to a logical HIGH and the second voltage corresponds to a logical LOW of the DALI bus (15).

7. DALI interface (1) according to claim 6,
wherein the first voltage is between 10V and 20V, and/or
wherein the second voltage is lower than 8V.

8. DALI interface (1) according to claim 6 or 7,
wherein the resonant half-bridge converter (5) is adapted to operate continuously,
wherein the DALI interface (1) comprises a power supply, switchable between a first supply voltage and a second supply voltage being supplied to the resonant half-bridge converter (5),
wherein the DALI interface (1) is adapted to generate and supply the first voltage to the DALI bus (15), by supplying the first supply voltage to the resonant half-bridge converter (5), and
wherein the DALI interface (1) is adapted to generate and supply the second voltage to the DALI bus (15), by supplying the second supply voltage to the resonant half-bridge converter (5).

9. DALI interface (1) according to claim 6 or 7,
wherein the resonant half-bridge converter (5) is adapted to operate in a pulse width operation mode,
wherein the DALI interface (1) is adapted to generate and supply the first voltage to the DALI bus (15), by operating the resonant half-bridge converter (5) at a first duty cycle, and
wherein the DALI interface (1) is adapted to generate and supply the second voltage to the DALI bus (15), by operating the resonant half-bridge converter (5) at a second duty cycle, wherein the first duty cycle is larger than the second duty cycle.

10. DALI interface (1) according to claim 6 or 7,
wherein the resonant half-bridge converter (5) is adapted to selectively operate at a first frequency and at a second frequency, wherein the first frequency and the second frequency have different distances from a resonance frequency of the resonator (11) of the resonant half-bridge converter (5),
wherein the DALI interface (1) is adapted to generate and supply the first voltage to the DALI bus (15), by operating the resonant half-bridge converter (5) at the first frequency, and
wherein the DALI interface (1) is adapted to generate and supply the second voltage to the DALI bus (15), by operating the resonant half-bridge converter (5) at the second frequency, wherein the first frequency is closer to the resonance frequency of the resonator (11) than the second frequency.

11. DALI interface (1) according to claim 6 or 7,
wherein the resonant half-bridge converter (5) is adapted to operate in a burst mode,
wherein the DALI interface (1) is adapted to generate and supply the first voltage to the DALI bus (15), by operating the resonant half-bridge converter (5), and
wherein the DALI interface (1) is adapted to generate and supply the second voltage to the DALI bus (15), by not operating the resonant half-bridge converter (5).

12. DALI interface (1) according to any of the claims 6 to 11, wherein the DALI interface (1) is adapted to operate the resonant half-bridge converter (5) to transition from the first voltage to the second voltage, and from the second voltage to the first voltage within no more than 30µs.

13. DALI interface (1) according to claim 4 and claim 12, wherein the output smoothing unit (14) comprises a capacitor (141) or a bandpass filter.

14. DALI interface (1) according to claim 13,
wherein the output smoothing unit (14) comprises a voltage limiter, adapted to limit remaining ripple in the smoothed rectified transformer signal.

## Patentansprüche

1. DALI-Schnittstelle (1), umfassend:
eine integrierte DALI-Stromversorgung (2), umfassend einen resonanten Halbbrückenwandler (5), der einen Transformator (12) und einen Resonator (11) an einer Primärseite (6) des Transformators (12) aufweist und angepasst ist, um, an einer Sekundärseite (7) des Transformators (12), eine erste Spannung eines DALI-Bus-Ausgangssignals (24) zu erzeugen und einen DALI-Bus (15) zu speisen, und
eine Empfangseinheit (4), die angepasst ist, um DALI-Signale zu empfangen, die einen Stromfluss auf dem DALI-Bus (15) während eines aktiven Umschaltens des resonanten Halbbrückenwandlers (5) angeben,
wobei die Empfangseinheit (4) angepasst ist, um einen Ausgangsstrom eines Ausgangssignals (21) des Resonators (11) zu messen,
wobei die Empfangseinheit (4) angepasst ist, um den Stromfluss auf dem DALI-Bus (15) aus dem gemessenen Ausgangsstrom des Ausgangssignals (21) des Resonators (11) an der Primärseite (6) des Transformators (12)) abzuleiten.

2. DALI-Schnittstelle (1) nach Anspruch 1,
wobei die Empfangseinheit (4) angepasst ist, um eine Ausgangsspannung des Ausgangssignals (21) auf der Primärseite (6) des resonanten Halbbrückenwandlers (5) zu messen, und
wobei die DALI-Schnittstelle (1) angepasst ist, um den resonanten Halbbrückenwandler (5) basierend auf der gemessenen Ausgangsspannung auf der Primärseite (6) auszuregeln.

3. DALI-Schnittstelle (1) nach einem der Ansprüche 1 bis 2, wobei die Empfangseinheit (4) umfasst:
- einen Shunt-Widerstand zum Empfangen der DALI-Signale, die den Stromfluss auf dem DALI-Bus (15) während des aktiven Umschaltens des resonanten Halbbrückenwandlers (5) angeben, oder
- eine Hilfswicklung eines Transformators des resonanten Halbbrückenwandlers (5) zum Empfangen der DALI-Signale, die den Stromfluss auf dem DALI-Bus (15) während des aktiven Umschaltens des resonanten Halbbrückenwandlers (5) angeben.

4. DALI-Schnittstelle (1) nach einem der Ansprüche 1 bis 3,
wobei der resonante Halbbrückenwandler (5) umfasst:
o an der Primärseite (7) des Transformators (12) mindestens zwei Schalter (10), die angepasst sind, um ein gepulstes Primärseitensignal (20) aus einem Eingangsgleichstromsignal (19) zu erzeugen,
o der Resonator angepasst ist, um ein Resonatorsignal (21) zu erzeugen, wenn er mit dem gepulsten Primärseitensignal (20) gespeist wird,
der Transformator (12) angepasst ist, um das Resonatorsignal (21) mit der Sekundärseite zu koppeln, wobei ein Transformatorsignal (22) entsteht, und
wobei die Sekundärseite (7) des Transformators (12) umfasst:
o einen Gleichrichter (13), der angepasst ist, um das Transformatorsignal (22) gleichzurichten, wobei ein gleichgerichtetes Transformatorsignal (23) entsteht, und
o eine Ausgangsleistungsglättungseinheit (14), die angepasst ist, um das gleichgerichtete Transformatorsignal (23) zu glätten, wobei durch ein geglättetes gleichgerichtetes Transformatorsignal das DALI-Busausgangssignal (24) entsteht.

5. DALI-Schnittstelle (1) nach Anspruch 4,
wobei die mindestens zwei Schalter (10) durch integrierte Schaltungen ausgebildet sind, und/oder
wobei der Transformator (12) durch eine integrierte Schaltung ausgebildet ist, und/oder
wobei der Resonator (11) durch eine integrierte Schaltung ausgebildet ist.

6. DALI-Schnittstelle (1) nach einem der Ansprüche 1 bis 5, wobei der resonante Halbbrückenwandler (5) angepasst ist, um eine zweite Spannung wahlweise bereitzustellen, die sich von der ersten Spannung an den DALI-bus (15) unterscheidet,
wobei die erste Spannung einem logischen HOCH entspricht und die zweite Spannung einem logischen TIEF des DALI-Busses (15) entspricht.

7. DALI-Schnittstelle (1) nach Anspruch 6,
wobei die erste Spannung zwischen 10 V und 20 V liegt, und/oder
wobei die zweite Spannung niedriger als 8 V ist.

8. DALI-Schnittstelle (1) nach Anspruch 6 oder 7,
wobei der resonante Halbbrückenwandler (5) angepasst ist, um fortlaufend zu arbeiten,
wobei die DALI-Schnittstelle (1) eine Stromversorgung umfasst, die zwischen einer ersten Versorgungsspannung und einer zweiten Versorgungsspannung, mit der der resonante Halbbrückenwandler (5) gespeist wird, umschaltbar ist,
wobei die DALI-Schnittstelle (1) angepasst ist, um die erste Spannung zu erzeugen und den DALI-Bus (15) damit durch Speisen des resonanten Halbbrückenwandlers (5) mit der ersten Versorgungsspannung zu speisen, und
wobei die DALI-Schnittstelle (1) angepasst ist, um die zweite Spannung zu erzeugen und den DALI-Bus (15) damit durch Speisen des resonanten Halbbrückenwandlers (5) mit der zweiten Versorgungsspannung zu speisen.

9. DALI-Schnittstelle (1) nach Anspruch 6 oder 7,
wobei der resonante Halbbrückenwandler (5) angepasst ist, um in einem Pulsbreitenbetriebsmodus zu arbeiten,
wobei die DALI-Schnittstelle (1) angepasst ist, um die erste Spannung zu erzeugen und den DALI-Bus (15) damit durch Betreiben des resonanten Halbbrückenwandlers (5) bei einer ersten Impulsdauer zu speisen, und
wobei die DALI-Schnittstelle (1) angepasst ist, um die zweite Spannung zu erzeugen und den DALI-Bus (15) damit durch Betreiben des resonanten Halbbrückenwandlers (5) bei einer zweiten Impulsdauer zu speisen, wobei die erste Impulsdauer größer als die zweite Impulsdauer ist.

10. DALI-Schnittstelle (1) nach Anspruch 6 oder 7,
wobei der resonante Halbbrückenwandler (5) angepasst ist, um bei einer ersten Frequenz und bei einer zweiten Frequenz wahlweise zu arbeiten, wobei die erste Frequenz und die zweite Frequenz unterschiedliche Abstände von einer Resonanzfrequenz des Resonators (11) des resonanten Halbbrückenwandlers (5) aufweisen,
wobei die DALI-Schnittstelle (1) angepasst ist, um die erste Spannung zu erzeugen und den DALI-Bus (15) damit durch Betreiben des resonanten Halbbrückenwandlers (5) bei der ersten Frequenz zu speisen, und
wobei die DALI-Schnittstelle (1) angepasst ist, um die zweite Spannung zu erzeugen und den DALI-Bus (15) damit durch Betreiben des resonanten Halbbrückenwandlers (5) bei der zweiten Frequenz zu speisen, wobei die erste Frequenz näher an der Resonanzfrequenz des Resonators (11) als die zweite Frequenz ist.

11. DALI-Schnittstelle (1) nach Anspruch 6 oder 7,
wobei der resonante Halbbrückenwandler (5) angepasst ist, um in einem Burst-Modus zu arbeiten,
wobei die DALI-Schnittstelle (1) angepasst ist, um die erste Spannung zu erzeugen und den DALI-Bus (15) damit durch Betreiben des resonanten Halbbrückenwandlers (5) zu speisen, und
wobei die DALI-Schnittstelle (1) angepasst ist, um die zweite Spannung zu erzeugen und den DALI-Bus (15) damit durch Nichtbetreiben des resonanten Halbbrückenwandlers (5) zu speisen.

12. DALI-Schnittstelle (1) nach einem der Ansprüche 6 bis 11,
wobei die DALI-Schnittstelle (1) angepasst ist, um den resonanten Halbbrückenwandler (5) zu betreiben, um innerhalb nicht mehr als 30 µs von der ersten Spannung in die zweite Spannung und von der zweiten Spannung in die erste Spannung überzugehen.

13. DALI-Schnittstelle (1) nach Anspruch 4 und 12,
wobei die Ausgangsleistungsglättungseinheit (14) einen Kondensator (141) oder einen Bandpassfilter umfasst.

14. DALI-Schnittstelle (1) nach Anspruch 13,
wobei die Ausgangsleistungsglättungseinheit (14) einen Spannungsbegrenzer umfasst, der angepasst ist, um eine Restwelligkeit in dem geglätteten gleichgerichteten Transformatorsignal zu begrenzen.

## Revendications

1. Interface DALI (1) comprenant :
une source d'énergie DALI intégrée (2), comprenant un convertisseur demi-pont sonore (5) comportant un transformateur (12) et un résonateur (11) sur un côté primaire (6) du transformateur (12), et adapté pour générer et fournir, sur le côté secondaire (7) du transformateur (12), une première tension d'un signal de sortie de bus DALI (24) à un bus DALI (15), et
une unité de réception (4), adaptée pour recevoir des signaux DALI indiquant un flux de courant sur le bus DALI (15) pendant la commutation active du convertisseur demi-pont sonore (5),
dans laquelle l'unité de réception (4) est adaptée pour mesurer un courant de sortie d'un signal de sortie (21) du résonateur (11),
dans laquelle l'unité de réception (4) est adaptée pour déduire le flux de courant sur le bus DALI (15) à partir du courant de sortie mesuré du signal de sortie (21) du résonateur (11) sur le côté primaire (6) du transformateur (12).

2. Interface DALI (1) selon la revendication 1,
dans laquelle l'unité de réception (4) est adaptée pour mesurer une tension de sortie du signal de sortie (21) sur le côté primaire (6) du convertisseur en demi-pont sonore (5), et
dans laquelle l'interface DALI (1) est adaptée pour réguler le convertisseur demi-pont sonore (5) selon la tension de sortie mesurée du côté primaire (6).

3. Interface DALI (1) selon l'une des revendications 1 à 2, dans laquelle l'unité de réception (4) comprend
- une résistance shunt pour recevoir les signaux DALI indiquant le flux de courant sur le bus DALI (15) pendant la commutation active du convertisseur demi-pont sonore (5), ou
- un enroulement auxiliaire d'un transformateur du convertisseur en demi-pont sonore (5), pour recevoir les signaux DALI indiquant le flux de courant sur le bus DALI (15) pendant la commutation active du convertisseur en demi-pont sonore (5).

4. Interface DALI (1) selon l'une des revendications 1 à 3,
dans laquelle le convertisseur en demi-pont sonore (5) comprend
o du côté primaire (7) du transformateur (12), au moins deux commutateurs (10), adaptés pour générer un signal pulsé du côté primaire (20) à partir d'un signal CC d'entrée (19),
o le résonateur est adapté pour générer un signal de résonateur (21) lorsqu'il est fourni par le signal latéral primaire pulsé (20),
le transformateur (12) est adapté pour coupler le signal du résonateur (21) au côté secondaire, ce qui donne un signal de transformateur (22), et
dans laquelle le côté secondaire (7) du transformateur (12) comprend :
o un redresseur (13), adapté pour rectifier le signal de transformateur (22), résultant en un signal de transformateur rectifié (23), et
o une unité de lissage de sortie (14), adaptée pour lisser le signal de transformateur rectifié (23), un signal de transformateur rectifié lissé résultant dans le signal de sortie de bus DALI (24).

5. Interface DALI (1) selon la revendication 4,
dans laquelle au moins les deux commutateurs (10) sont formés par des circuits intégrés, et/ou
dans laquelle le transformateur (12) est formé par un circuit intégré, et/ou
dans laquelle le résonateur (11) est formé par un circuit intégré.

6. Interface DALI (1) selon l'une des revendications 1 à 5, dans laquelle le convertisseur demi-pont sonore (5) est adapté pour fournir sélectivement une seconde tension, différente de la première tension, au bus DALI (15),
dans laquelle la première tension correspond à un HIGH logique et la seconde tension correspond à un LOW logique du bus DALI (15).

7. Interface DALI (1) selon la revendication 6,
dans laquelle la première tension est entre 10 V et 20 V, et/ou
dans laquelle la seconde tension est inférieure à 8 V.

8. Interface DALI (1) selon la revendication 6 ou 7,
dans laquelle le convertisseur en demi-pont sonore (5) est adapté pour fonctionner en continu,
dans laquelle l'interface DALI (1) comprend une source d'énergie, commutable entre une première tension d'alimentation et une seconde tension d'alimentation fournie au convertisseur en demi-pont sonore (5),
dans laquelle l'interface DALI (1) est adaptée pour générer et fournir la première tension au bus DALI (15), en fournissant la première tension d'alimentation au convertisseur demi-pont sonore (5), et
dans laquelle l'interface DALI (1) est adaptée pour générer et fournir la seconde tension au bus DALI (15), en fournissant la seconde tension d'alimentation au convertisseur demi-pont sonore (5).

9. Interface DALI (1) selon la revendication 6 ou 7,
dans laquelle le convertisseur demi-pont sonore (5) est adapté pour fonctionner en mode de fonctionnement par largeur d'impulsion,
dans laquelle l'interface DALI (1) est adaptée pour générer et fournir la première tension au bus DALI (15), en faisant fonctionner le convertisseur demi-pont sonore (5) à un premier rapport cyclique, et
dans laquelle l'interface DALI (1) est adaptée pour générer et fournir la seconde tension au bus DALI (15), en faisant fonctionner le convertisseur demi-pont sonore (5) à un second rapport cyclique, dans laquelle le premier rapport cyclique étant supérieur au second rapport cyclique.

10. Interface DALI (1) selon la revendication 6 ou 7,
dans laquelle le convertisseur en demi-pont sonore (5) est adapté pour fonctionner sélectivement à une première fréquence et à une seconde fréquence, dans laquelle la première fréquence et la seconde fréquence ayant des distances différentes par rapport à une fréquence de résonance du résonateur (11) du convertisseur en demi-pont sonore (5),
dans laquelle l'interface DALI (1) est adaptée pour générer et fournir la première tension au bus DALI (15), en faisant fonctionner le convertisseur en demi-pont sonore (5) à la première fréquence, et
dans laquelle l'interface DALI (1) est adaptée pour générer et fournir la deuxième tension au bus DALI (15), en faisant fonctionner le convertisseur demi-pont sonore (5) à la deuxième fréquence,dans laquelle la première fréquence étant plus proche de la fréquence de résonance du résonateur (11) que la deuxième fréquence.

11. Interface DALI (1) selon la revendication 6 ou 7,
dans laquelle le convertisseur en demi-pont sonore (5) est adapté pour fonctionner en mode rafale,
dans laquelle l'interface DALI (1) est adaptée pour générer et fournir la première tension au bus DALI (15), en faisant fonctionner le convertisseur demi-pont sonore (5), et
dans laquelle l'interface DALI (1) est adaptée pour générer et fournir la deuxième tension au bus DALI (15),mais pas en faisant fonctionner le convertisseur demi-pont sonore (5).

12. Interface DALI (1) selon l'une des revendications 6 à 11,
dans laquelle l'interface DALI (1) est adaptée pour faire fonctionner le convertisseur demi-pont sonore (5) afin de passer de la première tension à la seconde tension, et de la seconde tension à la première tension dans un délai ne dépassant pas 30 µs.

13. Interface DALI (1) selon les revendications 4 et 12,
dans laquelle l'unité de lissage de sortie (14) comprend un condensateur (141) ou un filtre passe-bande.

14. Interface DALI (1) selon la revendication 13,
dans laquelle l'unité de lissage de sortie (14) comprend un limiteur de tension, adapté pour limiter l'ondulation restante dans le signal de transformateur rectifié lissé.
